# EUROPEAN PATENT SPECIFICATION

(11) **EP 3 742 531 B1**
(45) Date of publication and mention of the grant of the patent: **28.02.2024**
(21) Application number: 19741807.2
(22) Date of filing: 18.01.2019
(51) Int. Cl.: H01M 10/26, H01M 10/62, H01M 4/54, H01M 10/44, H01M 4/24, H01M 4/34, H01M 10/32, H01M 4/38, H01M 4/42, H01M 4/62, H01M 4/02

(54) **ALKALINE SECONDARY BATTERY AND CHARGING METHOD OF SAID ALKALINE SECONDARY BATTERY**
ALKALISCHE SEKUNDÄRBATTERIE UND LADEMETHODE DIESER ALKALISCHEN SEKUNDÄRBATTERIE
PILE ALCALINE SECONDAIRE ET MÉTHODE DE CHARGEMENT DE LADITE PILE ALCALINE

(30) Priority: 18.01.2018 JP 2018006240; 29.01.2018 JP 2018012863; 01.03.2018 JP 2018036068
(43) Date of publication of application: 25.11.2020
(73) Proprietor: Maxell, Ltd., Kyoto 618-8525 (JP)
(72) Inventor: INOUE, Yusuke, Oyamazaki-cho Otokuni-gun Kyoto 618-8525 (JP); WATANABE, Mitsutoshi, Oyamazaki-cho Otokuni-gun Kyoto 618-8525 (JP)
(74) Representative: Diehl & Partner
(86) International application number: PCT/JP2019/001482
(87) International publication number: WO 2019/142915

(56) References cited:
- EP-A1- 0 978 889
- EP-A1- 2 750 225
- WO-A1-2009/031673
- CN-A- 102 832 419
- JP-A- H02 216 758
- JP-A- H06 315 233
- JP-A- H09 238 431
- JP-A- S55 133 765
- JP-A- S58 131 668
- JP-A- 2007 214 125
- JP-A- 2014 167 910
- JP-A- 2017 045 683
- JP-U- S5 778 238
- US-B1- 6 856 922

## Description

### Technical Field

The present invention relates to an alkaline secondary battery having excellent charging-discharging cycle characteristics and a charging method thereof, and a charging device for an alkaline secondary battery.

### Background Art

Alkaline batteries (silver oxide batteries) including a positive electrode containing a silver oxide, a negative electrode containing zinc or a zinc alloy, and an alkaline electrolyte have been widely and commonly used as primary batteries because of their high discharge capacity and excellent discharging voltage flatness.

At the same time, it has been studied to use an alkaline battery including a positive electrode containing a silver oxide and an alkaline battery including a negative electrode containing zinc or a zinc alloy, as secondary batteries. In the battery including a positive electrode containing a silver oxide, it is considered that the positive electrode reacts as a formula (1) or (2) below during charging.

2Ag + 2OH⁻ → Ag₂O + H₂O + 2e⁻ (1)

Ag₂O + 2OH⁻ → 2AgO + H₂O + 2e⁻ (2)

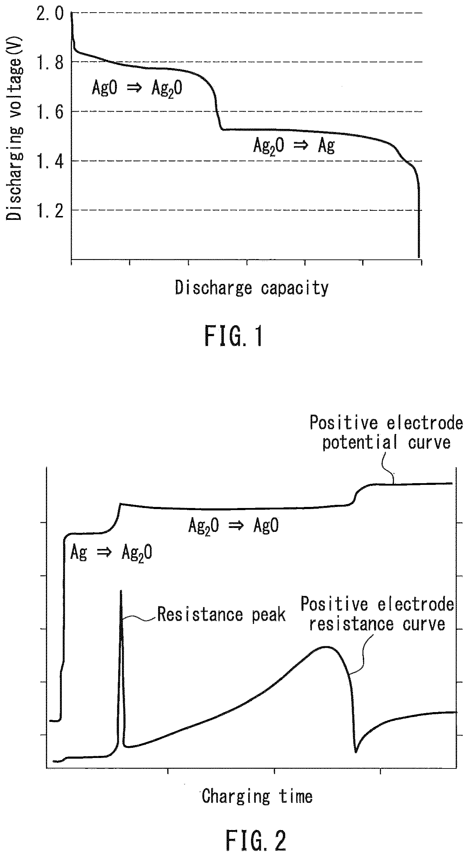

In the positive electrode of the secondary battery, silver is generated from silver oxide (AgO) through Ag₂O during discharging. In a discharging curve formed at this time, two levels of voltages appear as illustrated in FIG. 1, which are a discharging voltage (battery voltage) of about 1.8 V by a discharging reaction from AgO to Ag₂O, and a discharging voltage of about 1.5 V by a subsequent discharging reaction from Ag₂O to Ag.

When the battery is charged subsequent to discharging, silver oxide crystals, which are non-conductive, are formed around silver particles. This hinders the charging reaction and decreases the utilization rate of the active material if reactivity in the positive electrode during charging is not sufficiently high. Thus, favorable charging-discharging cycle characteristics cannot be obtained.

To cope with this problem, Patent Document 1 proposes to mix potassium titanate fibers in a positive electrode active material to increase the retention amount of an electrolyte solution in the positive electrode and enhance charging-and-discharging reversibility. Patent Document 2 proposes to add a metal oxide selected from zinc oxide, calcium oxide and titanium dioxide, as a pore-forming agent in a positive electrode to enhance charging-discharging cycle characteristics. Patent Document 3 proposes to add powder of ZnO, SiO₂, ZrO₂, TiO₂, Al₂O₃, etc., having an average particle size of about 250 nm or less, as a stabilizer in a positive electrode to enhance charging-discharging cycle characteristics.

Meanwhile, Patent Document 4 proposes to mix 0.003 to 0.3% by weight of silica fine powder having an average primary particle size of 6 to 50 nm and a specific surface area of 50 to 500 m²/g in a positive electrode material to improve fluidity of material to precisely fill the necessary amount in a battery container, and thereby preventing a swell of a battery during charging.

Patent Documents 5 examines the use of an additive such as polyalkylene glycol in an alkaline electrolyte solution, as a method for enhancing cycle characteristics of an alkaline secondary battery by improving the properties of a negative electrode containing zinc or a zinc alloy.

As charging and discharging conditions of the alkaline secondary battery, Patent Document 5 adopts a constant-current and constant-voltage charging mode (CCCV charging mode) that includes: charging with a constant current of 5 mA until the battery voltage reaches 1.85 V; and charging with a constant voltage of 1.85 V In Patent Document 6, the threshold voltage of the constant-current and constant-voltage charging mode is set at 1.95 V (see paragraph [0032]).

Documents JP S58 131668 A and JP H02 216758 A disclose an alkaline secondary battery comprising a zinc-based anode, an alkaline electrolyte and a cathode comprising Ag₂O, MnO₂ and graphite. Document JP S55 133765 A discloses an alkaline secondary battery comprising a zinc-based anode, an alkaline electrolyte comprising ZnO and a cathode comprising Ag₂O, MnO₂, and graphite. However MnO₂ are not insulating particles.

### Prior Art Documents

### Patent Documents

Patent Document 1: JP S58(1983)-128658 A
Patent Document 2: JP 2009-543276 A
Patent Document 3: JP 2013-510390 A
Patent Document 4: JP 2000-164220 A
Patent Document 5: WO 2017/047628
Patent Document 6: JP 2011-502329 A

### Disclosure of Invention

### Problem to be Solved by the Invention

The charging-discharging cycle characteristics of the alkaline secondary battery including the positive electrode containing a silver oxide can be improved to some extent by applying the positive electrode configurations described in Patent Documents 1 to 4. Further, according to Patent Document 5, the technique described therein can enhance various properties of the alkaline secondary battery including the negative electrode containing zinc or a zinc alloy.

However, considering future developments in the application of alkaline secondary batteries, it is demanded to further enhance the charging-discharging cycle characteristics. To achieve this, it is particularly required to reduce a sharp capacity drop in the initial stage (from the 1st cycle to about the 10th cycle) of the charging-discharging cycle. Therefore, further studies are necessary to improve the charging-discharging cycle characteristics of the alkaline secondary battery.

In the alkaline secondary battery, it is possible to increase the battery capacity per unit volume by increasing the charging voltage so as to progress an oxidation reaction until the generation of divalent AgO. However, since AgO is unstable in the alkaline electrolyte solution and easily generates gas inside the battery, it tends to shorten the cycle life of the battery due to the swell or liquid spill of the battery.

With the foregoing in mind, the present invention provides an alkaline secondary battery that can reduce the capacity drop in the initial stage of the charging-discharging cycle and has excellent charging-discharging cycle characteristics.

Further, the present invention provides a charging method and a charging device for an alkaline secondary battery that do not cause a large capacity drop in the battery by repetition of the charging-discharging cycle while hardly causing the swell or liquid spill of the battery by long-term storage.

### Means for Solving Problem

A first alkaline secondary battery of the present invention is an alkaline secondary battery, including: a positive electrode that is provided with a positive electrode mixture layer containing a silver oxide; a negative electrode; and an alkaline electrolyte. The positive electrode mixture layer further contains insulating inorganic particles and carbon particles. The carbon particles include graphite particles and carbon black particles, the positive electrode mixture layer contains the insulating inorganic particles in an amount of 0.1 to 7% by mass,the positive electrode mixture layer contains the graphite particles in an amount of 1 % by mass or more, andthe positive electrode mixture layer contains the carbon black particles in an amount of 0.1% by mass or more.

A second alkaline secondary battery not part of the present invention is an alkaline secondary battery including: a positive electrode; a negative electrode; and an alkaline electrolyte. The negative electrode contains zinc-based particles selected from zinc particles and zinc alloy particles. The alkaline electrolyte contains potassium hydroxide or sodium hydroxide, and lithium hydroxide, and polyalkylene glycol.

A method for charging an alkaline secondary battery of the present invention is a method for charging the alkaline secondary battery of the present invention including: a positive electrode that is provided with a positive electrode mixture layer containing silver; a negative electrode; and an alkaline electrolyte. The method includes: a constant-current charging step performed until a predetermined cutoff condition of constant-current charging is satisfied; and a constant-voltage charging step performed after the cutoff condition of constant-current charging is satisfied. A charging voltage in the constant-voltage charging step is set so that in the positive electrode, an oxidation reaction from silver to silver oxide (I) progresses while an oxidation reaction from silver oxide (I) to silver oxide (II) does not progress in the constant-current charging step and the constant-voltage charging step.

A charging device for an alkaline secondary battery not part of the present invention is a charging device for an alkaline secondary battery including: a positive electrode that is provided with a positive electrode mixture layer containing silver; a negative electrode; and an alkaline electrolyte. The charging device includes: a means for current supply that supplies a charging current to the battery; a means for measuring charging current that measures the charging current to be supplied to the battery; a means for measuring charging voltage that measures a charging voltage to be supplied to the battery; and a controller that controls the charging current supplied by the means for current supply so that a constant-current charging is performed until a predetermined cutoff condition of constant-current charging is satisfied and a constant-voltage charging is performed after the cutoff condition of constant-current charging is satisfied. The charging voltage during the constant-voltage charging is set so that in the positive electrode, an oxidation reaction from silver to silver oxide (I) progresses while an oxidation reaction from silver oxide (I) to silver oxide (II) does not progress.

### Effects of the Invention

The alkaline secondary battery of the present invention can reduce the capacity drop in the initial stage of the charging-discharging cycle and improve charging-discharging cycle characteristics. Further, the charging method of the present invention and the charging device of the present invention can reduce the capacity drop in an alkaline secondary battery caused by repetition of the charging-discharging cycle.

### Brief Description of Drawing

[FIG. 1] FIG. 1 is a graph illustrating voltage change characteristics during discharging of an alkaline secondary battery that includes a positive electrode containing a silver oxide.
[FIG. 2] FIG. 2 is a graph illustrating a potential change and a resistance change of a positive electrode of an alkaline secondary battery containing silver in the positive electrode, measured when the battery in a discharged state is charged according to a constant-current charging.
[FIG. 3] FIG. 3 is a side view schematically illustrating an exemplary alkaline secondary battery.
[FIG. 4] FIG. 4 is a cross-sectional view illustrating main components of the alkaline secondary battery illustrated in FIG. 3.
[FIG. 5] FIG. 5 is a graph illustrating results of a charging-discharging cycle test of alkaline secondary batteries of Reference Examples 1 to 3.
[FIG. 6] FIG. 6 is a graph illustrating results of the charging-discharging cycle test of alkaline secondary batteries of Examples 1 to 4 and Reference Example 1.
[FIG. 7] FIG. 7 illustrates discharging curves of the alkaline secondary batteries of Examples 1, 2 and Reference Example 1, measured during discharging in the 30th cycle in the charging-discharging cycle test.
[FIG. 8] FIG. 8 is a graph illustrating results of the charging-discharging cycle test of alkaline secondary batteries of Examples 5 to 7 and Reference Example 1.
[FIG. 9] FIG. 9 is a graph illustrating results of the charging-discharging cycle test of alkaline secondary batteries of Examples 1, 8, 9 and Reference Example 1.
[FIG. 10] FIG. 10 is a graph illustrating results of the charging-discharging cycle test of alkaline secondary batteries of Examples 5, 10 and Reference Example 1.
[FIG. 11] FIG. 11 is a graph illustrating results of the charging-discharging cycle test of alkaline secondary batteries of Examples 11 to 16 and Reference Example 1.
[FIG. 12] FIG. 12 is a schematic circuit diagram of a charging device of an example.
[FIG. 13] FIG. 13 is a graph illustrating a change of the battery capacity when the charging-discharging cycle is repeated by the charging device of an example.

### Description of the Invention

### (Embodiments of alkaline secondary battery)

An alkaline secondary battery according to first embodiment of this application is an alkaline secondary battery including: a positive electrode that is provided with a positive electrode mixture layer containing a silver oxide; a negative electrode; and an alkaline electrolyte. The positive electrode mixture layer further contains insulating inorganic particles and carbon particles. The carbon particles include graphite particles and carbon black particles. The positive electrode mixture layer contains the insulating inorganic particles in an amount of 0.1 to 7% by mass,the positive electrode mixture layer contains the graphite particles in an amount of 1 % by mass or more, andthe positive electrode mixture layer contains the carbon black particles in an amount of 0.1% by mass or more.

An alkaline secondary battery not part of the invention is an alkaline secondary battery, including: a positive electrode; a negative electrode; and an alkaline electrolyte. The negative electrode contains zinc-based particles selected from zinc particles and zinc alloy particles. The alkaline electrolyte contains potassium hydroxide or sodium hydroxide, and lithium hydroxide, and polyalkylene glycols.

The alkaline secondary batteries of the embodiments can reduce the capacity drop in the initial stage of the charging-discharging cycle and improve charging-discharging cycle characteristics. Hereinafter, the alkaline secondary batteries of the embodiments will be described.

### [Positive electrode]

As described above, in the alkaline secondary battery containing a silver oxide as a positive electrode active material, addition of insulating inorganic particles of metal oxide or the like in the positive electrode can improve charging-discharging cycle characteristics to some extent, but the improvement is limited.

To cope with this, in this embodiment, graphite particles and carbon black particles as carbon materials are contained in the positive electrode together with the insulating inorganic particles, thereby further improving the charging-discharging cycle characteristics of the alkaline secondary battery and enhancing the charging efficiency to improve the discharge capacity.

The positive electrode according to the alkaline secondary battery of this embodiment has a positive electrode mixture layer containing a silver oxide as a positive electrode active material, insulating inorganic particles, and carbon materials. The positive electrode may be composed only of the positive electrode mixture layer (positive electrode mixture molded body), or may have a configuration in which the positive electrode mixture layer is formed on a current collector.

The silver oxide as a positive electrode active material may be AgO or Ag₂O. However, from the viewpoint of the charging-discharging cycle characteristics, it is preferable not to contain AgO that is unstable in an alkaline electrolyte solution.

The particle size of the silver oxide is not particularly limited, and the average particle size is preferably 10 µm or less, and more preferably 2 µm or less. The use of the silver oxide with the above particle size improves the utilization rate during charging, and makes it possible to obtain a large charge capacity even if a cutoff voltage of charging is relatively low. Thus, the charging-discharging cycle characteristics of the battery can be improved further. Moreover, it is possible to reduce the swell of the battery that can be caused by, e.g., increasing the cutoff voltage of charging.

However, if the particle size of the silver oxide is too small, the production and subsequent handling of the silver oxide become difficult. Therefore, the average particle size of the silver oxide is preferably 0.01 µm or more, and more preferably 0.03 µm or more.

In the present specification, the average particle sizes of the silver oxide and other particles (insulating inorganic particles and graphite particles described below) mean a particle size (D₅₀) at a cumulative frequency of 50% in the volume-based distribution, which is measured with a laser scattering particle size distribution analyzer (e.g., "LA-920" manufactured by HORIBA, Ltd.) by dispersing the particles in a medium that does not dissolve those particles.

The insulating inorganic particles of the positive electrode mixture layer are, e.g., oxide particles of at least one element selected from Si, Zr, Ti, Al, Mg and Ca. Specific examples of the oxides include Al₂O₃, TiO₂, SiO₂, ZrO₂, MgO, CaO, AlOOH, and Al(OH)₃, and the oxide particles are preferably insoluble or hardly soluble in an electrolyte solution. The positive electrode mixture layer is not particularly limited as long as it contains one kind or two or more kinds of the insulating inorganic particles.

If the particle size of the insulating inorganic particles is too large, the effect of improving the charging-discharging cycle characteristics of the battery may decrease. Therefore, the average particle size of the insulating inorganic particles is preferably 0.5 µm or less, and more preferably 0.3 µm or less from the viewpoint of more favorably improving the charging-discharging cycle characteristics of the battery.

On the other hand, if the particle size of the insulating inorganic particles is too small, the effect of improving the charging efficiency (initial capacity) of the battery may decrease. Therefore, the average particle size of the insulating inorganic particles is preferably 0.01 µm or more, and more preferably 0.05 µm or more from the viewpoint of more favorably improving the charging efficiency of the battery.

The graphite particles of the positive electrode mixture layer may either natural graphite (e.g., flake graphite) particles or artificial graphite particles. These may be used alone or in combination of two or more.

The graphite particles have a function of enhancing the moldability of the positive electrode mixture layer as described later. The average particle size of the graphite particles is preferably 1 µm or more, and more preferably 2 µm or more from the viewpoint of more favorably exhibiting the function, while it is preferably 7 µm or less, and more preferably 5 µm or less from the viewpoint of improving the conductivity.

Examples of the carbon black particles of the positive electrode mixture layer include furnace black, channel black, acetylene black, and thermal black. These may be used alone or in combination of two or more. Among these carbon black particles, acetylene black is preferably used because of its high conductivity with less impurities.

Since the use of the carbon black particles allows easy creation of a conductive network in the positive electrode mixture layer, the contact point with the silver oxide particles (positive electrode active material) increases as compared with the case of using the graphite particles alone, for example. This effectively reduces the electrical resistance in the positive electrode mixture layer, thereby improving the reaction efficiency of the positive electrode active material during charging.

Meanwhile, in the case of using the carbon black particles alone, a binder is needed depending on the thickness of the positive electrode mixture layer to increase moldability. In the case of using the graphite particles in combination with the carbon black particles, the moldability of the positive electrode mixture layer increases even if the positive electrode mixture molded body or the positive electrode mixture layer is as thin as 0.4 mm or less, and more preferably as thin as 0.3 mm or less, and consequently, the production failure can be avoided easily without using a binder.

Further, as described above, the combined use of the graphite particles and the carbon black particles can increase the charging efficiency and the charging-discharging cycle characteristics of the battery, as compared with the case of adding only the insulating inorganic particles in the positive electrode mixture layer.

The content of the silver oxide as a positive electrode active material in the positive electrode mixture layer (i.e., the positive electrode mixture molded body or positive electrode mixture-coated layer formed on a current collector) is preferably, e.g., 60 mass% or more, more preferably 80 mass% or more, and particularly preferably 90 mass% or more to obtain enough capacity, with the total solid content constituting the positive electrode mixture layer being taken as 100 mass%.

The content of the insulating inorganic particles in the positive electrode mixture layer is 0.1 mass% or more, preferably 3 mass% or more from the viewpoint of favorably producing the effect of the insulating inorganic particle (particularly, the effect of improving the charging-discharging cycle characteristics of the battery). However, if the amount of the insulating inorganic particles in the positive electrode mixture layer is too large, the capacity of the battery decreases as the filling amount of the positive electrode active material decreases, and further, the discharge capacity may drop suddenly when the charging-discharging cycle has proceeded, depending on the type of the insulating inorganic particles. Therefore, the content of the insulating inorganic particles in the positive electrode mixture layer is 7 mass% or less, preferably 5 mass% or less.

Further, the content of the graphite particles in the positive electrode mixture layer is 1 mass% or more, preferably 2 mass% or more from the viewpoint of favorably producing the effects of improving the charging efficiency and the charging-discharging cycle characteristics of the battery by the combined use with the carbon black particles. Further, the content of the graphite particles in the positive electrode mixture layer is preferably 7 mass% or less, and more preferably 4 mass% or less from the viewpoint of preventing the battery capacity drop due to an excessively reduced amount of the silver oxide in the positive electrode mixture layer.

Further, the content of the carbon black particles in the positive electrode mixture layer is 0.1 mass% or more, preferably 0.5 mass% or more from the viewpoint of favorably producing the effects of improving the charging efficiency and the charging-discharging cycle characteristics of the battery by the combined use with the graphite particles. The excessive amount of the carbon black particles in the positive electrode mixture layer may increase the swelling amount of the positive electrode if the battery is stored at high temperature, for example. Therefore, the content of the carbon black particles in the positive electrode mixture layer is preferably 1.5 mass% or less, and more preferably 1 mass% or less from the viewpoint of reducing the swell of the positive electrode during storage of the battery (particularly, storage at a high temperature of about 60°C) and improving the storage characteristic of the battery.

The positive electrode mixture layer can be formed without using a binder as described above. However, a binder may be used when the strength needs to be increased. Examples of the binder of the positive electrode mixture layer include fluorocarbon resins such as polytetrafluoroethylene. When the binder is used, the content of the binder in the positive electrode mixture layer is preferably 0.1 to 20 mass%.

The positive electrode in the form of a positive electrode mixture molded body can be produced, for example, by preparing a positive electrode mixture by mixing a positive electrode active material, insulating inorganic particles, carbon particles, and optionally an alkaline electrolyte (it may be the same as that injected into the battery) etc., and molding the positive electrode mixture into a predetermined shape under pressure.

The positive electrode in the form of a positive electrode mixture layer formed on a current collector can be produced, for example, by preparing a positive electrode mixture-containing composition (slurry, paste, etc.) by dispersing a positive electrode active material, insulating inorganic particles, carbon particles, etc., into water or an organic solvent such as N-methyl-2-pyrrolidone (NMP), applying the composition to the current collector and drying it, and as needed subjecting it to pressing such as calendering.

The positive electrode is not limited to those produced by the above-described methods, and may be produced by other methods.

When the positive electrode is in the form of a positive electrode mixture molded body, the thickness is preferably 0.15 to 4 mm. Meanwhile, when the positive electrode is in the form of a positive electrode mixture layer formed on a current collector, the thickness of the positive electrode mixture layer (the thickness per one side of the current collector) is preferably 30 to 300 µm.

The current collector used for the positive electrode may be made of, e.g., stainless steels such as SUS316, SUS430, and SUS444, aluminum, or aluminum alloy. The current collector may be in the form of, e.g., a plain-woven wire mesh, an expanded metal, a lath mesh, a punching metal, a metal foam, or a foil (plate). The thickness of the current collector is preferably, e.g., 0.05 to 0.2 mm. It is also desirable that a paste-like conductive material such as carbon paste or silver paste be applied to the surface of the current collector.

### [Negative electrode]

The negative electrode of the alkaline secondary battery contains zinc-based particles selected from zinc particles and zinc alloy particles (hereinafter, also called "zinc-based particles" simply). In such a negative electrode, zinc present in the particles acts as an active material of the negative electrode.

Examples of the alloying component of the zinc alloy particles include indium (the content of indium is, e.g., 50-500 ppm on a mass basis) and bismuth (the content of bismuth is, e.g., 50-500 ppm on a mass basis) (the remainder are zinc and unavoidable impurities). The zinc-based particles contained in the negative electrode may be one kind or two or more kinds.

The zinc-based particles preferably do not contain mercury as an alloying component. The use of such zinc-based particles in a battery can reduce the environmental pollution caused by the disposal of battery. Further, the zinc-based particles preferably do not contain lead as an alloying component for the same reason as mercury.

The particle size of the zinc-based particles may be defined as follows. For example, the proportion of the particles with a particle size of 75 µm or less is preferably 50 mass% or less, and more preferably 30 mass% or less of the whole powder. Moreover, the proportion of the particles with a particle size of 100 to 200 µm is preferably 50 mass% or more, and more preferably 90 mass% or more of the whole powder. The particle size of the zinc-based particles said herein can be obtained by the same measuring method as the average particle size measuring method of the silver oxide described above.

In addition to the zinc-based particles, the negative electrode may optionally contain, e.g., a gelling agent (sodium polyacrylate, carboxymethyl cellulose, etc.). This may be mixed with an alkaline electrolyte to form a negative electrode agent (i.e., a gelled negative electrode). The amount of the gelling agent in the negative electrode is preferably, e.g., 0.5 to 1.5 mass%.

The negative electrode may also be a non-gelled negative electrode that does not substantially contain a gelling agent described above (note that the non-gelled negative electrode may contain a gelling agent as long as it does not thicken an alkaline electrolyte present in the vicinity of the zinc-based particles; therefore, the expression "does not substantially contain a gelling agent" means that a gelling agent may be contained to the extent that it does not affect the viscosity of the alkaline electrolyte). On the other hand, in a gelled negative electrode, an alkaline electrolyte is present together with a gelling agent in the vicinity of the zinc-based particles. The action of the gelling agent thickens the alkaline electrolyte and interferes with the movement of the alkaline electrolyte and eventually the movement of ions in the electrolyte. It is considered that this delays the reaction speed in the negative electrode and inhibits the improvement of the battery load characteristics (particularly heavy-load characteristics). By using the non-gelled negative electrode to avoid an increase in the viscosity of the alkaline electrolyte present in the vicinity of the zinc-based particles and thus keep high-speed movement of ions in the alkaline electrolyte, the reaction speed in the negative electrode can be enhanced, and the load characteristics (particularly heavy-load characteristics) can be enhanced further.

The alkaline electrolyte to be contained in the negative electrode may be the same as that to be injected into the battery.

The content of the zinc-based particles in the negative electrode is, e.g., preferably 60 mass% or more, and more preferably 65 mass% or more, and preferably 75 mass% or less, and more preferably 70 mass% or less.

The negative electrode preferably contains an indium compound. The indium compound contained in the negative electrode can more effectively prevent the generation of gas due to a corrosion reaction between the zinc-based particles and the alkaline electrolyte.

Examples of the indium compound include indium oxide and indium hydroxide.

The amount of the indium compound in the negative electrode is preferably 0.003 to 1 with respect to 100 of the zinc-based particles at a mass ratio.

### [Alkaline electrolyte]

As described above, in the alkaline secondary battery containing zinc or a zinc alloy as a negative electrode active material, when an additive such as polyalkylene glycol is contained in an alkaline electrolyte solution, the charging-discharging cycle characteristics can be improved to some extent, but the improvement is limited.

Therefore, in this embodiment, by adding potassium hydroxide or sodium hydroxide, and lithium hydroxide, and polyalkylene glycols in the alkaline electrolyte, the sharp capacity drop in the initial stage of the charging-discharging cycle can be prevented particularly and excellent charging-discharging cycle characteristics can be obtained.

The present inventors assume that the following mechanism of the alkaline electrolyte containing lithium hydroxide and polyalkylene glycols improves the charging-discharging cycle characteristics of the alkaline secondary battery.

When the alkaline secondary battery including a negative electrode containing zinc-based particles is discharged, tetrahydroxozincate (II) ion [Zn(OH)₄²⁻] is generated in the negative electrode and released in the alkaline electrolyte. The tetrahydroxozincate (II) ion returns to the surfaces of the zinc-based particles of the negative electrode during charging of the alkaline secondary battery and forms zinc dendrite.

However, when the alkaline electrolyte contains polyalkylene glycols, the polyalkylene glycols adhere to the surfaces of the zinc-based particles of the negative electrode and prevent the tetrahydroxozincate (II) ion from returning to the surfaces of the zinc-based particles. Further, when the alkaline electrolyte contains lithium hydroxide, the tetrahydroxozincate (II) ion can be relatively stable in the alkaline electrolyte. These functions prevent the formation of zinc dendrite and hardly cause short circuits in the charging-discharging cycle.

However, the lithium hydroxide in the alkaline electrolyte also has a function of lowering the charging efficiency in the initial stage of the charging and discharging of the battery. This function of the lithium hydroxide can be prevented when the alkaline electrolyte contains polyalkylene glycols.

In this embodiment, the function of the polyalkylene glycols and the function of the lithium hydroxide are considered to be performed synergistically, thereby favorably preventing the sharp capacity drop in the initial stage of the charging-discharging cycle particularly, and obtaining excellent charging-discharging cycle characteristics.

As the alkaline electrolyte of the alkaline secondary battery of this embodiment, for example, an aqueous solution (alkaline electrolyte solution) of potassium hydroxide or sodium hydroxide (electrolyte salt) can also be used. The alkaline electrolyte further contains lithium hydroxide and polyalkylene glycols.

The content (concentration; the same applies to the following) of the lithium hydroxide in the alkaline electrolyte is preferably 0.1 mass% or more, and more preferably 0.5 mass% or more from the viewpoint of more favorably producing the effect obtained by the lithium hydroxide to be contained in the alkaline electrolyte. The excessive amount of the lithium hydroxide increases the internal resistance of the battery. Therefore, the content of the lithium hydroxide in the alkaline electrolyte is preferably 5 mass% or less, and more preferably 3 mass% or less.

The polyalkylene glycols used in this embodiment are compounds in which alkylene glycols such as ethylene glycol, propylene glycol, and butylene glycol are polymerized or copolymerized. The compounds may have a cross-linked structure, a branched structure, or a structure having the substituted end. The compounds with a weight average molecular weight of about 200 or more are preferably used. The upper limit of the weight average molecular weight is not particularly limited. However, in order to easily achieve the effect of the compounds to be added, the compounds are preferably water-soluble and generally have a weight average molecular weight of 20000 or less, and more preferably 5000 or less.

Specifically, preferred examples include polyethylene glycols in which ethylene glycol is polymerized, and polypropylene glycols in which propylene glycol is polymerized.

The polyethylene glycols preferably include polyethylene glycol, polyethylene oxide, and a straight-chain compound that is represented by, e.g., the following general formula (1).
[Chemical Formula 1]

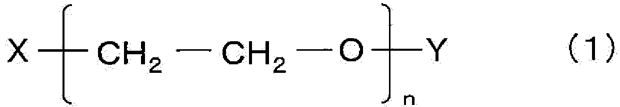

In the general formula (1), X represents an alkyl group, a hydroxyl group, a carboxyl group, an amino group, or a halogen atom, Y represents a hydrogen atom or an alkyl group, and n is 4 or more on average.

In the general formula (1), n corresponds to the average addition molar number of ethylene oxide in the polyethylene glycols. Moreover, n is 4 or more on average, and the upper limit of n is not particularly limited. However, the compounds with a weight average molecular weight of about 200 to 20000 are preferably used.

The polypropylene glycols preferably include polypropylene glycol, polypropylene oxide, and a straight-chain compound that is represented by, e.g., the following general formula (2).
[Chemical Formula 2]

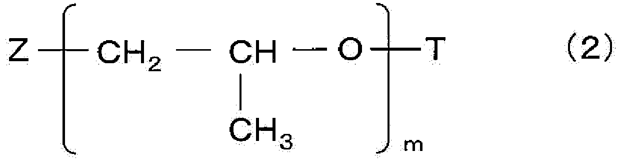

In the general formula (2), Z represents an alkyl group, a hydroxyl group, a carboxyl group, an amino group, or a halogen atom, T represents a hydrogen atom or an alkyl group, and m is 3 or more on average.

In the general formula (2), m corresponds to the average addition molar number of propylene oxide in the polypropylene glycols. Moreover, m is 3 or more on average, and the upper limit of m is not particularly limited. However, the compounds with a weight average molecular weight of about 200 to 20000 are preferably used.

The polyalkylene glycols may be copolymerized compounds including an ethylene oxide unit and a propylene oxide unit (e.g., polyoxyethylene polyoxypropylene glycol).

The content (concentration) of the polyalkylene glycols in the alkaline electrolyte is preferably 0.1 mass% or more, and more preferably 0.5 mass% or more from the viewpoint of more favorably producing the effect of the polyalkylene glycols to be contained in the alkaline electrolyte (when a plurality of compounds is used as the polyalkylene glycols, the content refers to a total amount thereof the same applies to the following). The excessive amount of the polyalkylene glycols in the alkaline electrolyte may deteriorate the discharging characteristics of the battery. Therefore, the content of the polyalkylene glycols in the alkaline electrolyte is preferably 8 mass% or less, and more preferably 4 mass% or less from the viewpoint of more favorably maintaining the discharging characteristics of the battery by limiting the amount of the polyalkylene glycols in the alkaline electrolyte.

As described above, the alkaline electrolyte contains potassium hydroxide or sodium hydroxide as an electrolyte salt. The alkaline electrolyte may contain either one of potassium hydroxide and sodium hydroxide, or may contain both of them.

The content of the electrolyte salt in the alkaline electrolyte is not particularly limited as long as favorable conductivity is obtained in the alkaline electrolyte. For example, when the potassium hydroxide is used, the content (concentration) of the potassium hydroxide is preferably 20 mass% or more, more preferably 30 mass% or more, and preferably 40 mass% or less, and more preferably 38 mass% or less.

In addition to the above components, the alkaline electrolyte may optionally contain various known additives within a range that does not impair the effects of this embodiment. For example, zinc oxide may be added to the alkaline electrolyte in order to prevent corrosion (oxidation) of the zinc-based particles used for the negative electrode of the alkaline secondary battery. In this case, zinc oxide may be added to the negative electrode.

Moreover, it is preferred that at least one selected from the group consisting of a manganese compound, a tin compound, and an indium compound is dissolved in the alkaline electrolyte. It is considered that when these compounds are dissolved in the alkaline electrolyte, ions derived from these compounds (manganese ion, tin ion, indium ion) adsorb to the positive electrode active material and inhibit the growth of silver oxide crystals to minimize the size of the silver oxide crystals to be formed during charging. This prevents the generated silver oxide crystals from inhibiting the charging reaction of the positive electrode and further improves the charging-discharging cycle characteristics of the battery.

Examples of the manganese compound dissolved in the alkaline electrolyte include manganese chloride, manganese acetate, manganese sulfide, manganese sulfate, and manganese hydroxide. Examples of the tin compound dissolved in the alkaline electrolyte include tin chloride, tin acetate, tin sulfide, tin bromide, tin oxide, tin hydroxide, and tin sulfate. Examples of the indium compound dissolved in the alkaline electrolyte include indium hydroxide, indium oxide, indium sulfate, indium sulfide, indium nitrate, indium bromide, and indium chloride.

The concentration of the indium compound, manganese compound, and tin compound in the alkaline electrolyte is preferably 50 ppm or more, more preferably 500 ppm or more, and preferably 10000 ppm or less, and more preferably 5000 ppm or less on a mass basis from the viewpoint of more favorably producing the above effect (when one of these is dissolved in the alkaline electrolyte, the concentration refers to a concentration thereof when two or more of these are dissolved therein, the concentration refers to a total concentration thereof).

### [Separator]

In the alkaline secondary battery, a separator is interposed between the positive electrode and the negative electrode. Examples of the separator that can be used for the alkaline secondary battery include the following: a nonwoven fabric mainly composed of vinylon and rayon; a vinylon-rayon nonwoven fabric (vinylon-rayon mixed paper); a polyamide nonwoven fabric; a polyolefin-rayon nonwoven fabric; vinylon paper; vinylon-linter pulp paper; and vinylon-mercerized pulp paper. Moreover, the separator may be a laminate of a hydrophilic microporous polyolefin film (such as a microporous polyethylene film or a microporous polypropylene film), a cellophane film, and a liquid-absorbing layer (i.e., an electrolyte holding layer) such as vinylon-rayon mixed paper. The thickness of the separator is preferably 20 to 500 µm.

It is preferable to interpose between the positive electrode and the negative electrode an anion conductive membrane that includes: a polymer as a matrix; and particles of at least one metal compound that is dispersed in the matrix selected from the group consisting of metal oxides, metal hydroxides, metal carbonates, metal sulfates, metal phosphates, metal borates, and metal silicates.

### [Form of Battery]

The form of the alkaline secondary battery is not particularly limited. The alkaline secondary battery can be in any form such as flat type, laminated type, or tubular type. For example, a flat-type battery (including a coin-type battery and a button-type battery) has a battery case in which a flat outer can and a sealing plate are joined by caulking via a gasket, or a flat outer can and a sealing plate are welded to seal the joint between them. A laminated-type battery has an outer package made of a metallic laminated film. A tubular-type battery (including a cylindrical battery and a rectangular (prismatic) battery) has a battery case in which a cylindrical outer can with a bottom and a sealing plate are joined by caulking via a gasket, or a cylindrical outer can with a bottom and a sealing plate are welded to seal the joint between them.

When the outer container is sealed by caulking, the gasket arranged between the outer can and the sealing plate may be made of, e.g., polypropylene or nylon. Moreover, when heat resistance is required in relation to the intended use of the battery, the gasket may also be made of heat-resistant resin with a melting point of more than 240°C, including, e.g., a fluorocarbon polymer such as a tetrafluoroethylene-perfluoroalkoxyethylene copolymer (PFA); polyphenylene ether (PPE); polysulfone (PSF); polyarylate (PAR); polyether sulfone (PES); polyphenylene sulfide (PPS); and polyether ether ketone (PEEK). Further, when the intended use of the battery requires heat resistance, the outer container may be sealed by a glass hermetic seal.

In order to prevent the elution of elements such as iron that constitute the outer can during charging, it is desirable that the inner surface of the outer can be plated with anti-corrosion metal such as gold.

### [Application of battery]

The alkaline secondary battery of the present invention can be used not only for applications in which alkaline primary batteries (e.g., a silver oxide primary battery) have been employed, but also for applications in which conventionally known alkaline secondary batteries and non-aqueous electrolyte secondary batteries have been employed.

### (Embodiment of charging device and charging method of alkaline secondary battery)

According to the finding of the present inventors concerning the alkaline secondary battery (silver oxide battery) in which the positive electrode includes a positive electrode mixture layer containing silver, when the battery in a discharged state is charged, a steep peak appears in the battery resistance at a shifting point from the first stage oxidation reaction (Ag → Ag₂O) to the second stage oxidation reaction (Ag₂O → AgO). FIG. 2 illustrates a potential curve and a resistance curve of the positive electrode during constant-current charging.

The reason for the appearance of the steep peak is considered as follows. When the silver particles contained in the positive electrode are oxidized, an Ag₂O layer as an insulator grows on the surfaces of the silver particles. The Ag₂O layer covering the surfaces of the silver particles throughout the positive electrode creates a state in which an insulating layer is formed all over the positive electrode. The resistance sharply increases at this point. As the charging proceeds further, the oxidation of the Ag₂O layer progresses and conductive AgO is generated, or the Ag₂O layer breaks and Ag inside is exposed to the alkaline electrolyte solution, resulting in a sharp resistance drop. These are considered to be observed as the resistance peak.

In view of the above, it is considered that by charging the silver oxide battery not to exceed the peak, it is possible to prevent the progress of the oxidation reaction to unstable AgO in the positive electrode, and thus improve the charging-discharging cycle characteristics and enhance the stability during long-term storage. Moreover, by performing a constant-current charging in the initial stage of charging and a constant-voltage charging immediately before the resistance peak, it is possible to progress the oxidation reaction from Ag to Ag₂O in the entire positive electrode.

In this embodiment, on the basis of the above finding, the silver oxide battery is charged according to a constant-current and constant-voltage mode, and the charging voltage during the constant-voltage charging is set so that in the positive electrode, the oxidation reaction from silver to silver oxide (I) progresses while the oxidation reaction from silver oxide (I) to silver oxide (II) does not progress. More preferably, similarly to the above, the threshold voltage to shift toward the constant-voltage charging is set so that in the positive electrode, the oxidation reaction from silver to silver oxide (I) progresses while the oxidation reaction from silver oxide (I) to silver oxide (II) does not progress during the constant-current charging.

An embodiment of a charging device disclosed in the present application is a charging device for an alkaline secondary battery including: a positive electrode that is provided with a positive electrode mixture layer containing silver; a negative electrode; and an alkaline electrolyte. The charging device includes: a means for current supply that supplies a charging current to the battery; a means for measuring charging current that measures the charging current to be supplied to the battery; a means for measuring charging voltage that measures a charging voltage to be supplied to the battery; and a controller that controls the charging current supplied by the means for current supply so that a constant-current charging is performed until a predetermined cutoff condition of constant-current charging is satisfied and a constant-voltage charging is performed after the cutoff condition of constant-current charging is satisfied. The charging voltage during the constant-voltage charging is set so that in the positive electrode, an oxidation reaction from silver to silver oxide (I) progresses while an oxidation reaction from silver oxide (I) to silver oxide (II) does not progress.

The cutoff condition of constant-current charging can typically be a condition that the charging voltage has reached a predetermined threshold, or that the resistance peak illustrated in FIG. 2 is detected. Whether "the charging voltage has reached a predetermined threshold" or not can be judged based on the charging voltage measured by the means for measuring charging voltage. The detection of the resistance peak can be judged based on, e.g., whether or not the rate of increase in charging voltage per unit time measured by the means for measuring charging voltage exceeds a predetermined rate. Incidentally, the constant-current charging, during which the charging current is constant, can be performed by feedback control of the means for current supply so that the charging current measured by the means for measuring charging current is constant. The constant-voltage charging, during which the charging voltage is constant, can be performed by feedback control of the means for current supply so that the charging voltage measured by the means for measuring charging voltage is constant.

A charging method disclosed in the present application is a method for charging an alkaline secondary battery including: a positive electrode that is provided with a positive electrode mixture layer containing silver; a negative electrode; and an alkaline electrolyte. The method includes: a constant-current charging step performed until a predetermined cutoff condition of constant-current charging is satisfied; and a constant-voltage charging step performed after the cutoff condition of constant-current charging is satisfied. A charging voltage in the constant-voltage charging step is set so that in the positive electrode, an oxidation reaction from silver to silver oxide (I) progresses while an oxidation reaction from silver oxide (I) to silver oxide (II) does not progress in the constant-current charging step and the constant-voltage charging step.

In the charging device and the charging method of this embodiment, ideally, the charging voltage (actual voltage) during the constant-voltage charging is perfectly constant. However, in the real circuit, the charging voltage regularly varies by about several percent due to tolerances of circuit elements that constitute the charging circuit, etc., and sudden or temporary noise due to disturbances may occur. The charging voltage during the constant-voltage charging can be preferably a constant voltage in which the maximum value in the range of regular variation is less than 1.856 V The "range of regular variation" refers to a range of variation of the actual voltage during the constant-voltage charging control in an environment within an operation-guaranteed range of the charging device, and does not include a sudden or temporary variation due to disturbances.

When a smoothing capacitor is connected to a charging voltage output part of the charging circuit, the regular variation appears in the form of a gradual voltage rise or voltage drop within a relatively long time range of about several tens of seconds to several minutes. This is due to, e.g., a resistance change according to the fluctuation of temperature of a resistor that constitutes a voltage-dividing circuit as the means for measuring charging voltage to measure the charging voltage.

If the tolerance of the charging voltage output by the charging circuit is less than 3%, the threshold and the control target value of the charging voltage during the constant-voltage charging can be set to 1.8 V, for example. In this case, a constant voltage that slightly fluctuates within a range of regular variation from 1.746 to 1.854 V is supplied to the battery. The minimum value in the range of regular variation of the charging voltage during the constant-voltage charging can be preferably 1.70 V or more, and more preferably 1.75 V or more. It is possible to further improve the charging cycle characteristics by setting the charging voltage as high as possible within a range that does not cause the oxidation reaction to AgO.

In the charging method and the charging device of this embodiment, the threshold and the charging voltage during the constant-voltage charging may be different from each other, but preferably they are the same. When the threshold and the charging voltage during the constant-voltage charging are different, it is preferable to provide a charging mode shifting step in which, after the charging voltage during the constant-current charging has reached the threshold, the charging voltage is proportionately changed until it becomes a constant voltage preset as a charging voltage during the constant-voltage charging.

The alkaline secondary battery to be charged by the charging method and the charging device of this embodiment includes a positive electrode having a positive electrode mixture layer containing silver. The charging control of such an alkaline secondary battery (silver oxide battery) becomes difficult if an extreme peak appears in the resistance of the positive electrode during charging. To reduce the increase in the resistance of the positive electrode during charging, the silver oxide particles may contain at least one element selected from the group consisting of Bi, Pb, Zr, Sn, Mn, Ti and Se. Hereinafter, "silver oxide" refers to "silver oxide (I)".

It is considered that the element contained in the silver oxide particles can exhibit its effect to some extent even when it is present at the grain boundary in the form of oxide or the like. However, the element is preferably present in the crystal lattice of the silver oxide because it can exhibit the effect more easily.

The element contained in the silver oxide particles is considered to be present in a trivalent or tetravalent oxidation state. The silver oxide containing at least one of these elements can be expected to have the above effect.

The content of the element in the silver oxide is preferably 0.3 mass% or more, more preferably 0.5 mass% or more, and particularly preferably 2 mass% or more from the viewpoint of favorably producing the effect of improving the charging-discharging cycle characteristics of the battery by these elements. The excessive amount of the element in the silver oxide may deteriorate the battery capacity. Therefore, the content of the element in the silver oxide is preferably 20 mass% or less, more preferably 15 mass% or less, and particularly preferably 13 mass% or less from the viewpoint of increasing the capacity of the alkaline secondary battery. The content of the element is based on 100 mass% of the whole silver oxide containing the element. When the element is composed of two or more kinds of the elements, the content of the element refers to a total amount of the elements.

The silver oxide particles containing the element can be produced, for example, by the following method.

An excess amount of an alkaline aqueous solution in which potassium hydroxide or sodium hydroxide is dissolved is stirred in a reaction vessel. Then, a soluble salt of silver such as silver nitrate and a soluble salt of the element (e.g., chloride, sulfate, nitrate, phosphate, carbonate, acetate) are dissolved in water to prepare a mixed solution. The mixed solution is added to the reaction vessel and reacts with the alkaline aqueous solution.

The molar ratio between the silver and the element may be adjusted according to the target content of the element in the silver oxide. To control the reaction speed, the alkaline aqueous solution may be cooled or heated to about 40 to 70°C, or the alkaline aqueous solution may further contain an organic solvent that is compatible with water (e.g., alcohol).

The alkaline aqueous solution may contain a dispersant such as gelatin, polyethylene glycol or polyvinyl pyrrolidone, in an amount of about 0.005 to 5 mass% to control the particle shape and the particle size of the reaction product and thus obtain fine particles.

The reaction product obtained by the above step may be washed with water and dried at a temperature of about 50 to 300°C before use. Alternatively, a solution containing the product may be stirred while keeping the temperature at about 50 to 90°C, and an oxidizing agent (e.g., potassium persulfate, sodium persulfate, potassium permanganate, or sodium hypochlorite) may be added to the solution to oxidize the product, followed by water washing and drying steps described above.

The content of the element in the silver oxide in this specification can be measured by emission spectral analysis using high-frequency inductively coupled plasma (ICP).

### Examples

First, the alkaline secondary battery of the present invention will be described by way of examples. However, the present invention is not limited to the following examples.

### (Reference Example 1)

A positive electrode mixture layer was formed by using a silver oxide (Ag₂O) having an average particle size of 5 µm as a positive electrode active material, and further using graphite particles (BET specific surface area: 20 m²/g, average particle size: 3.7 µm) and carbon black particles (acetylene black, BET specific surface area: 68 m²/g, average particle size of primary particles: 35 nm).

First, a positive electrode mixture was prepared by mixing 95.6 mass% of the silver oxide, 3.8 mass% of the graphite particles, and 0.6 mass% of the carbon black particles. Then, 80 mg of the positive electrode mixture was filled in a mold and molded under pressure into a disk shape with a packing density of 5.7 g/cm³, a diameter of 5.17 mm, and a height of 0.6 mm to produce a positive electrode mixture molded body (positive electrode mixture layer).

An anion conductive membrane to be used for the assembly of a battery was produced by kneading 5 g of a PTFE aqueous dispersion (solid content: 60 mass%), 2.5 g of an aqueous solution of sodium polyacrylate (concentration: 2 mass%) and 2.5 g of hydrotalcite particles (average particle size: 0.4 pm), rolling it to form a membrane with a thickness of 100 pm, and punching the membrane into a circle with a diameter of 5.7 mm.

A negative electrode active material used was mercury-free zinc alloy particles containing In (500 ppm), Bi (400 ppm), and Al (10 ppm) as additional elements. The mercury-free zinc alloy particles are generally used in alkaline primary batteries. The particle size of the zinc alloy particles was determined by the method described above. As a result, the average particle size (D₅₀) was 120 µm, and the proportion of the particles with a particle size of 75 µm or less was 25 mass% or less.

A composition for forming a negative electrode (negative electrode composition) was prepared by mixing the zinc alloy particles and ZnO at a ratio (mass ratio) of 97 : 3. Then, 19 mg of the composition was weighed and used for production of a negative electrode.

An alkaline electrolyte solution used was an aqueous solution of potassium hydroxide (concentration: 35 mass%) in which 3 mass% of zinc oxide was dissolved.

A separator was produced by forming two graft films (thickness: 30 µm) on both sides of a cellophane film (thickness: 20 pm), on top of which vinylon-rayon mixed paper (thickness: 100 µm) was further formed. The graft film was composed of a graft copolymer obtained by graft copolymerization of acrylic acid with a polyethylene main chain. This laminated body was punched into a circle with a diameter of 5.7 mm.

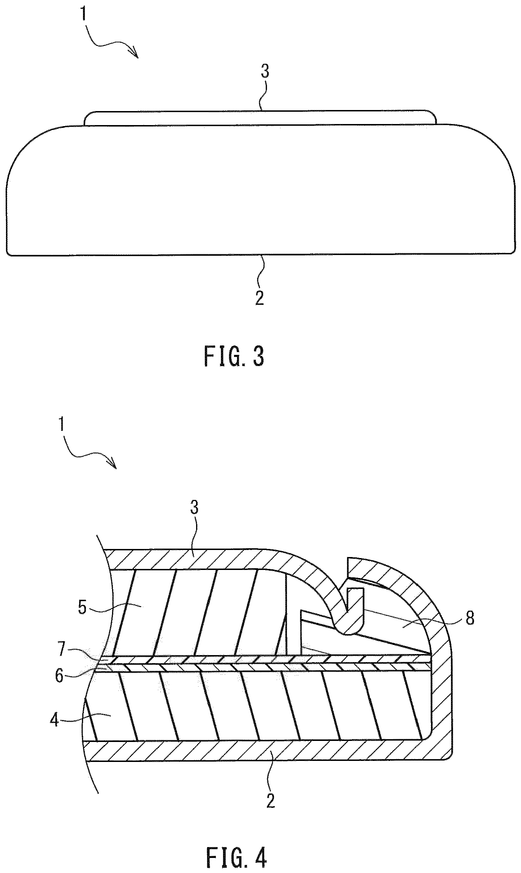

The positive electrode (positive electrode mixture molded body), the negative electrode (negative electrode composition), the alkaline electrolyte solution, the anion conductive membrane, and the separator were sealed in a battery container. The battery container included an outer can, a sealing plate, and an annular gasket. The outer can was made of a steel plate and had a gold-plated inner surface. The sealing plate was made of a clad plate of copper, stainless steel (SUS304), and nickel. The annular gasket was made of nylon 66. Thus, an alkaline secondary battery with a diameter of 5.8 mm and a thickness of 2.7 mm was produced. FIGS. 3 and 4 show the appearance and structure of the alkaline secondary battery, respectively. The anion conductive membrane was arranged to face the negative electrode. The separator was arranged on the positive electrode.

In the alkaline secondary battery 1 as shown in FIGS. 3 and 4, the positive electrode 4, the separator 6, and the anion conductive membrane 7 are provided in the outer can 2. The negative electrode 5 is provided in the sealing plate 3. The sealing plate 3 is fitted into the opening of the outer can 2 via the annular gasket (resin gasket) 8 having an L-shaped cross section. The opening edge of the outer can 2 is tightened inward, which brings the resin gasket 8 into contact with the sealing plate 3. Thus, the opening of the outer can 2 is sealed to form a closed structure in the battery. In other words, the alkaline secondary battery 1 as shown in FIGS. 3 and 4 is configured such that power generation components, including the positive electrode 4, the negative electrode 5, the separator 6, and the anion conductive membrane 7, are placed in the space (closed space) of the battery container, which includes the outer can 2, the sealing plate 3, and the resin gasket 8. Moreover, an alkaline electrolyte solution (not shown) is injected into the space and held by the separator 6. The outer can 2 also serves as a positive electrode terminal, and the sealing plate 3 also serves as a negative electrode terminal. The positive electrode 4 is a positive electrode mixture molded body containing silver oxide, graphite particles, and carbon black particles as described above.

### (Reference Example 2)

A positive electrode mixture molded body was produced in the same manner as in Reference Example 1 except for the use of a positive electrode mixture prepared by mixing 94.3 mass% of the silver oxide, 3.8 mass% of the graphite particles, and 1.9 mass% of the carbon black particles. An alkaline secondary battery was produced in the same manner as in Reference Example 1 except for the use of the above positive electrode mixture molded body.

### (Reference Example 3)

A positive electrode mixture molded body was produced in the same manner as in Reference Example 1 except for the use of a positive electrode mixture prepared by mixing 94.3 mass% of the silver oxide and 5.7 mass% of the graphite particles. An alkaline secondary battery was produced in the same manner as in Reference Example 1 except for the use of the above positive electrode mixture molded body.

The alkaline secondary batteries of Reference Examples 1 to 3 were subjected to the following charging-discharging cycle test and high-temperature storage characteristic evaluation.

### <Charging-discharging cycle test>

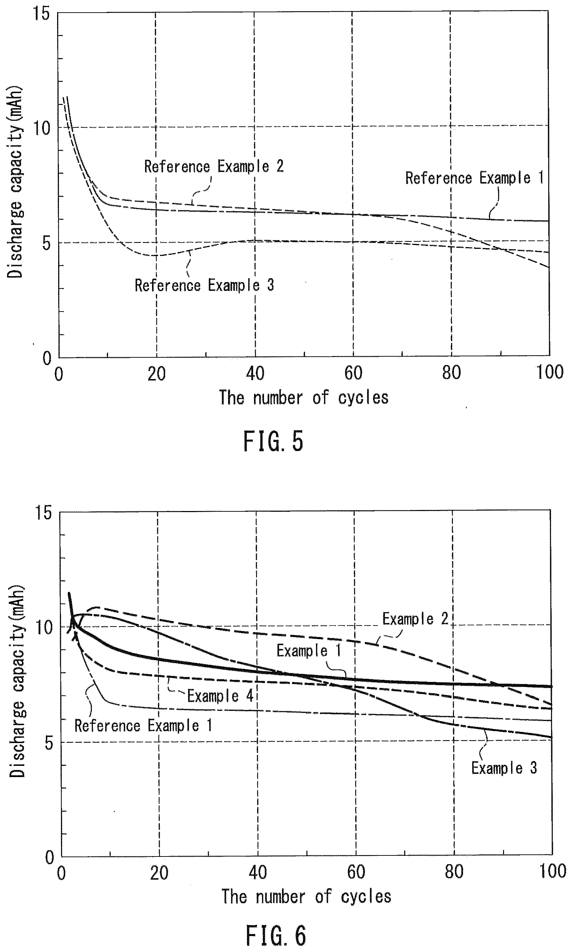

The batteries of Reference Examples 1 to 3 were measured for a discharge capacity per cycle by repeating a charging-discharging cycle 100 times. One cycle included charging (current value: 2 mA, final voltage: 1.85 V) and discharging (current value: 2 mA, final voltage: 1.0 V). FIG. 5 is a graph illustrating the results, the horizontal axis representing the number of cycles, and the vertical axis representing the discharge capacity (mAh).

### <High-temperature storage characteristic evaluation>

The batteries of Reference Examples 1 to 3 were discharged at 2 mA (final voltage: 1.0 V), and subsequently charged at 2 mA (final voltage: 1.85 V). Each charged battery was maintained at 60°C for 14 days, and the positive electrode mixture molded body was taken out from the battery to measure the thickness. A thickness change rate of the positive electrode mixture molded body was determined by subtracting the thickness of the positive electrode mixture molded body before storage from the thickness after storage, dividing the value (the thickness change amount) by the thickness before storage, and expressing the value in percentages. The high-temperature storage characteristics of the battery were evaluated from this value.

Table 1 shows the compositions of the positive electrode mixtures used to produce the positive electrode mixture molded bodies of the batteries of Reference Examples 1 to 3, and the results of the high-temperature storage characteristic evaluation.

**[Table 1]**

| | Composition of positive electrode mixture (mass%) | | | High-temperature storage characteristic evaluation |
|---|---|---|---|---|
| | Silver oxide | Graphite particles | Carbon black particles | Thickness change rate of positive electrode mixture molded body (%) |
| Reference Example 1 | 95.6 | 3.8 | 0.6 | 4 |
| Reference Example 2 | 94.3 | 3.8 | 1.9 | 11 |
| Reference Example 3 | 94.3 | 5.7 | 0 | 0.6 |

FIG. 5 indicates that the battery of Reference Example 3, whose positive electrode mixture molded body did not contain carbon black particles, largely dropped the discharge capacity at a relatively early number of cycles. Meanwhile, the batteries of Reference Examples 1 and 2, whose positive electrode mixture molded body contained graphite particles and carbon black particles, reduced the discharge capacity drop as compared with the battery of Reference Example 3.

Regarding the discharge capacity drop rate when the charging-discharging cycle proceeded, the batteries of Reference Examples 1 and 3 containing a small amount of or not containing carbon black particles resulted in a lower discharge capacity drop rate than the battery of Reference Example 2 containing a large amount of carbon black particles. This indicates that a large content of the carbon black particles becomes a factor of the decrease of the charging-discharging cycle characteristics.

Table 1 further shows that the thickness change rate of the positive electrode mixture molded body in high-temperature storage increased as the proportion of the carbon black particles contained in the positive electrode mixture molded body increased. Considering the results of the charging-discharging cycle together, it is desirable to set the content of the carbon black particles within a limited range (e.g., 1.5 mass% or less).

### (Example 1)

A positive electrode mixture was prepared in the same manner as in Reference Example 1 except for the use of Al₂O₃ particles (insulating inorganic particles, average particle size: 50 nm) in addition to the silver oxide, graphite particles, and carbon black particles, and change in the mixing ratio to 92.6 mass% of the silver oxide, 3.8 mass% of the graphite particles, 0.6 mass% of the carbon black particles, and 3 mass% of the Al₂O₃ particles.

A positive electrode mixture molded body was produced in the same manner as in Reference Example 1 except for the use of the above positive electrode mixture, and an alkaline secondary battery was produced in the same manner as in Reference Example 1 except for the use of the above positive electrode mixture molded body.

### (Example 2)

A positive electrode mixture was prepared in the same manner as in Example 1 except for the change in the mixing ratio to 90.6 mass% of the silver oxide, 3.8 mass% of the graphite particles, 0.6 mass% of the carbon black particles, and 5 mass% of the Al₂O₃ particles.

A positive electrode mixture molded body was produced in the same manner as in Example 1 except for the use of the above positive electrode mixture, and an alkaline secondary battery was produced in the same manner as in Example 1 except for the use of the above positive electrode mixture molded body.

### (Examples 3)

A positive electrode mixture was prepared in the same manner as in Example 1 except for the change in the mixing ratio to 85.6 mass% of the silver oxide, 3.8 mass% of the graphite particles, 0.6 mass% of the carbon black particles, and 10 mass% of the Al₂O₃ particles.

A positive electrode mixture molded body was produced in the same manner as in Example 1 except for the use of the above positive electrode mixture, and an alkaline secondary battery was produced in the same manner as in Example 1 except for the use of the above positive electrode mixture molded body.

### (Example 4)

A positive electrode mixture was prepared in the same manner as in Example 1 except for the change in the mixing ratio to 93.3 mass% of the silver oxide, 3.8 mass% of the graphite particles, 1.9 mass% of the carbon black particles, and 1 mass% of the Al₂O₃ particles.

A positive electrode mixture molded body was produced in the same manner as in Example 1 except for the use of the above positive electrode mixture, and an alkaline secondary battery was produced in the same manner as in Example 1 except for the use of the above positive electrode mixture molded body.

Table 2 shows the compositions of the positive electrode mixtures used to produce the positive electrode mixture molded bodies of the alkaline secondary batteries of Examples 1 to 4. Table 2 also shows the composition of the positive electrode mixture used to produce the positive electrode mixture molded body of the battery of Reference Example 1.

**[Table 2]**

| | Composition of positive electrode mixture (mass%) | | | |
|---|---|---|---|---|
| | Silver oxide | Graphite particles | Carbon black particles | Al₂O₃ particles |
| Reference Example 1 | 95.6 | 3.8 | 0.6 | 0 |
| Example 1 | 92.6 | 3.8 | 0.6 | 3 |
| Example 2 | 90.6 | 3.8 | 0.6 | 5 |
| Example 3 | 85.6 | 3.8 | 0.6 | 10 |
| Example 4 | 93.3 | 3.8 | 1.9 | 1 |

The alkaline secondary batteries of Examples 1 to 4 were subjected to the charging-discharging cycle test in the same manner as, e.g., the battery of Reference Example 1. FIG. 6 is a graph illustrating the results, the horizontal axis representing the number of cycles, and the vertical axis representing the discharge capacity (mAh). FIG. 6 also illustrates the result of the battery of Reference Example 1.

FIG. 6 indicates that the alkaline secondary batteries of Examples 1 to 4, whose positive electrode mixture molded body contained graphite particles, carbon black particles, and insulating inorganic particles, reduced the discharge capacity drop in the initial stage of the charging-discharging cycle as compared with the battery of Reference Example 1, whose positive electrode mixture molded body did not contain insulating inorganic particles. Further, in the subsequent charging-discharging cycles, the alkaline secondary batteries of Examples 1, 2 and 4, whose proportion of the Al₂O₃ particles (insulating inorganic particles) in the positive electrode was appropriate, maintained a higher discharge capacity than the battery of Reference Example 1 throughout 100 cycles or more. Further, the alkaline secondary battery of Example 3, whose proportion of the Al₂O₃ particles in the positive electrode was high, maintained a higher discharge capacity than the battery of Reference Example 1 up to about the 70th cycle. The above results indicate that the batteries of Examples 1 to 4 had more excellent charging-discharging cycle characteristics than the battery of Reference Example 1.

The batteries of Examples 1 and 2 were evaluated for the high-temperature storage characteristics in the same manner as, e.g., the battery of Reference Example 1. Table 3 shows the results along with the result of the battery of Reference Example 1.

**[Table 3]**

| | High-temperature storage characteristic evaluation |
|---|---|
| | Thickness change rate of positive electrode mixture molded body (%) |
| Reference Example 1 | 4 |
| Example 1 | 3 |
| Example 2 | 4 |

Table 3 shows that the thickness change amount due to high-temperature storage of the positive electrode mixture molded bodies of the batteries of Examples 1 and 2, which contained Al₂O₃ particles as the insulating inorganic particles, was equivalent to that of the positive electrode mixture molded body of the battery of Reference Example 1, which did not contain insulating inorganic particles, and had favorable high-temperature storage characteristics.

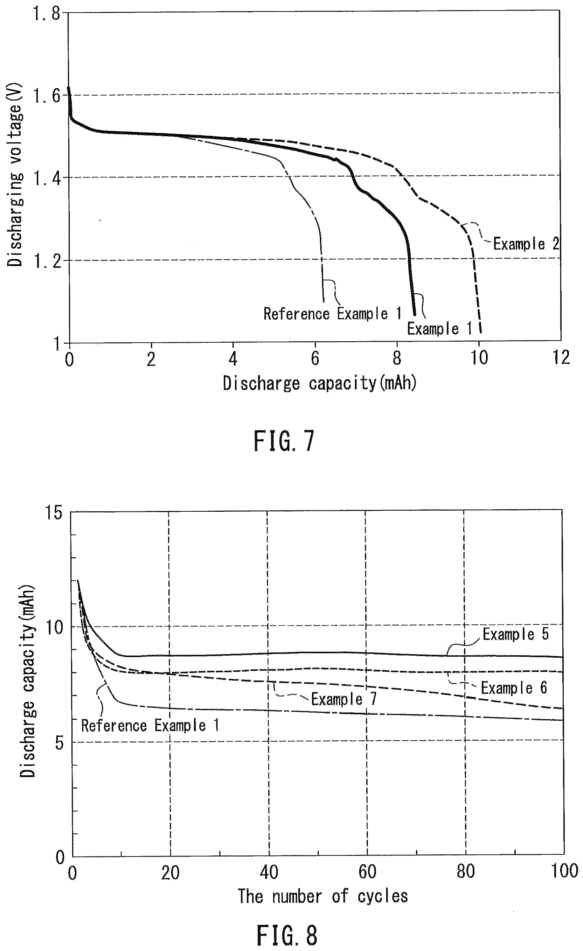

FIG. 7 illustrates discharging curves of the batteries of Examples 1, 2 and Reference Example 1, measured during discharging in the 30th charging-discharging cycle in the charging-discharging cycle test.

FIG. 7 indicates that the batteries of Examples 1 and 2, whose positive electrode mixture molded body contained graphite particles, carbon black particles, and insulating inorganic particles, had an operation voltage similar to that of the battery of Reference Example 1, whose positive electrode mixture molded body did not contain insulating inorganic particles. No adverse effect due to addition of the insulating inorganic particles was observed in the shape of the discharging curves.

### (Example 5)

A positive electrode mixture was prepared in the same manner as in Example 1 except for the use of TiO₂ particles (insulating inorganic particles, average particle size: 250 nm) in addition to the silver oxide, graphite particles, and carbon black particles, and change in the mixing ratio to 90.6 mass% of the silver oxide, 3.8 mass% of the graphite particles, 0.6 mass% of the carbon black particles, and 5 mass% of the TiO₂ particles.

A positive electrode mixture molded body was produced in the same manner as in Example 1 except for the use of the above positive electrode mixture, and an alkaline secondary battery was produced in the same manner as in Example 1 except for the use of the above positive electrode mixture molded body.

### (Example 6)

A positive electrode mixture was prepared in the same manner as in Example 1 except for the change in the mixing ratio to 85.6 mass% of the silver oxide, 3.8 mass% of the graphite particles, 0.6 mass% of the carbon black particles, and 10 mass% of the TiO₂ particles (average particle size: 250 nm).

A positive electrode mixture molded body was produced in the same manner as in Example 1 except for the use of the above positive electrode mixture, and an alkaline secondary battery was produced in the same manner as in Example 1 except for the use of the above positive electrode mixture molded body.

### (Example 7)

A positive electrode mixture was prepared in the same manner as in Example 1 except for the change in the mixing ratio to 93.3 mass% of the silver oxide, 3.8 mass% of the graphite particles, 1.9 mass% of the carbon black particles, and 1 mass% of the TiO₂ particles (average particle size: 250 nm).

A positive electrode mixture molded body was produced in the same manner as in Example 1 except for the use of the above positive electrode mixture, and an alkaline secondary battery was produced in the same manner as in Example 1 except for the use of the above positive electrode mixture molded body.

Table 4 shows the compositions of the positive electrode mixtures used to produce the positive electrode mixture molded bodies of the alkaline secondary batteries of Examples 5 to 7. Table 4 also shows the composition of the positive electrode mixture used to produce the positive electrode mixture molded body of the battery of Reference Example 1.

**[Table 4]**

| | Composition of positive electrode mixture (mass%) | | | |
|---|---|---|---|---|
| | Silver oxide | Graphite particles | Carbon black particles | TiO₂ particles |
| Reference Example 1 | 95.6 | 3.8 | 0.6 | 0 |
| Example 5 | 90.6 | 3.8 | 0.6 | 5 |
| Example 6 | 85.6 | 3.8 | 0.6 | 10 |
| Example 7 | 93.3 | 3.8 | 1.9 | 1 |

The alkaline secondary batteries of Examples 5 to 7 were subjected to the charging-discharging cycle test in the same manner as, e.g., the battery of Reference Example 1. FIG. 8 is a graph illustrating the results, the horizontal axis representing the number of cycles, and the vertical axis representing the discharge capacity (mAh). FIG. 8 also illustrates the result of the battery of Reference Example 1.

FIG. 8 indicates that the alkaline secondary batteries of Examples 5 to 7, whose positive electrode mixture molded body contained TiO₂ particles as the insulating inorganic particles, reduced the discharge capacity drop in the initial stage of the charging-discharging cycle as compared with the battery of Reference Example 1, whose positive electrode mixture molded body did not contain insulating inorganic particles. Further, in the subsequent charging-discharging cycles, the alkaline secondary batteries of Examples 5 to 7 maintained a higher discharge capacity than the battery of Reference Example 1 throughout 100 cycles or more. The above results indicate that, similarly to the batteries of Examples 1 to 4 containing Al₂O₃ particles as the insulating inorganic particles, the batteries of Examples 5 to 7 had more excellent charging-discharging cycle characteristics than the battery of Reference Example 1.

A comparison of the charging-discharging cycle characteristics of the battery of Example 3 and the battery of Example 6 clearly indicates that, in the case of using the Al₂O₃ particles as the insulating inorganic particles, a behavior of a sudden discharge capacity drop was observed when the charging-discharging cycle proceeded, if the proportion of the Al₂O₃ particles was large; however, in the case of using the TiO₂ particles, such a behavior was not observed. It turned out that the TiO₂ particles can configure batteries having more excellent charging-discharging cycle characteristics than the case of using the Al₂O₃ particles.

### (Example 8)

A positive electrode mixture was prepared in the same manner as in Example 1 except for the use of Al₂O₃ particles having an average particle size of 300 nm. A positive electrode mixture molded body was produced in the same manner as in Example 1 except for the use of the above positive electrode mixture, and an alkaline secondary battery was produced in the same manner as in Example 1 except for the use of the above positive electrode mixture molded body.

### (Example 9)

A positive electrode mixture was prepared in the same manner as in Example 1 except for the use of Al₂O₃ particles having a high aspect ratio (fibrous particles) of a major-axis average particle size of 300 nm and a minor-axis average particle size of 4 nm. A positive electrode mixture molded body was produced in the same manner as in Example 1 except for the use of the above positive electrode mixture, and an alkaline secondary battery was produced in the same manner as in Example 1 except for the use of the above positive electrode mixture molded body.

### (Example 10)

A positive electrode mixture was prepared in the same manner as in Example 5 except for the use of TiO₂ particles having an average particle size of 70 nm. A positive electrode mixture molded body was produced in the same manner as in Example 5 except for the use of the above positive electrode mixture, and an alkaline secondary battery was produced in the same manner as in Example 5 except for the use of the above positive electrode mixture molded body.

Table 5 shows the compositions of the positive electrode mixtures used to produce the positive electrode mixture molded bodies of the alkaline secondary batteries of Examples 8 and 9. Table 6 shows the composition of the positive electrode mixture used to produce the positive electrode mixture molded body of the alkaline secondary battery of Example 10. Table 5 also shows the compositions of the positive electrode mixtures used to produce the positive electrode mixture molded bodies of the batteries of Reference Example 1 and Example 1. Table 6 also shows the compositions of the positive electrode mixtures used to produce the positive electrode mixture molded bodies of the batteries of Reference Example 1 and Example 5.

**[Table 5]**

| | Composition of positive electrode mixture (mass%) | | | | Average particle size of Al₂O₃ particles (nm) |
|---|---|---|---|---|---|
| | Silver oxide | Graphite particles | Carbon black particles | Al₂O₃ particles | |
| Reference Example 1 | 95.6 | 3.8 | 0.6 | 0 | - |
| Example 1 | 92.6 | 3.8 | 0.6 | 3 | 50 |
| Example 8 | 92.6 | 3.8 | 0.6 | 3 | 300 |
| Example 9 | 92.6 | 3.8 | 0.6 | 3 | 4 × 300 |

**[Table 6]**

| | Composition of positive electrode mixture (mass%) | | | | Average particle size of TiO₂ particles (nm) |
|---|---|---|---|---|---|
| | Silver oxide | Graphite particles | Carbon black particles | TiO₂ particles | |
| Reference Example 1 | 95.6 | 3.8 | 0.6 | 0 | - |
| Example 5 | 90.6 | 3.8 | 0.6 | 5 | 250 |
| Example 10 | 90.6 | 3.8 | 0.6 | 5 | 70 |

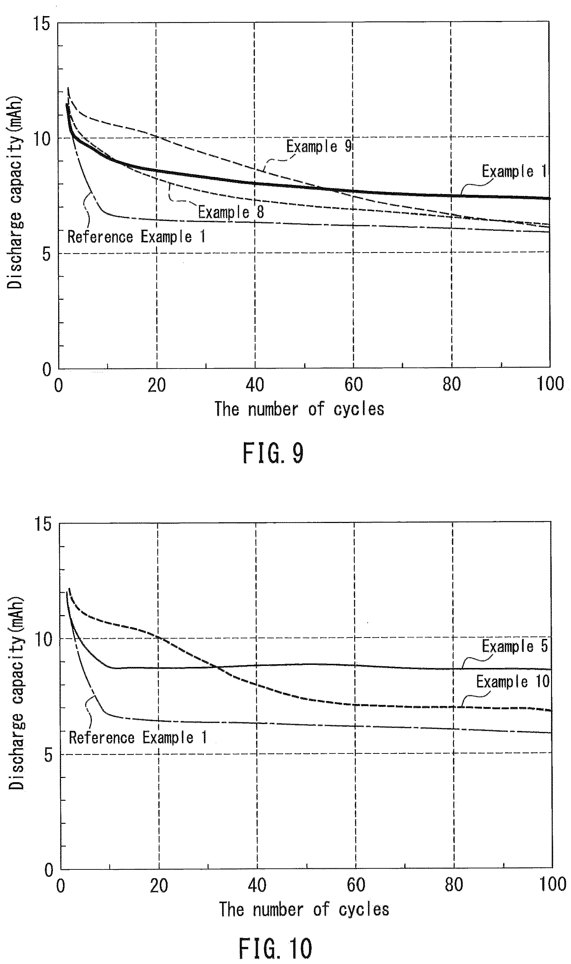

The alkaline secondary batteries of Examples 8 to 10 were subjected to the charging-discharging cycle test in the same manner as, e.g., the battery of Reference Example 1. FIGS. 9 and 10 are graphs illustrating the results, the horizontal axis representing the number of cycles, and the vertical axis representing the discharge capacity (mAh). FIG. 9 also illustrates the results of the batteries of Reference Example 1 and Example 1. FIG. 10 also illustrates the results of the batteries of Reference Example 1 and Example 5.

FIGS. 9 and 10 indicate that the alkaline secondary batteries of Examples 8 to 10 reduced the discharge capacity drop in the initial stage of the charging-discharging cycle as compared with the battery of Reference Example 1, whose positive electrode mixture molded body did not contain insulating inorganic particles. Further, in the subsequent charging-discharging cycles, the alkaline secondary batteries of Examples 8 to 10 maintained a higher discharge capacity than the battery of Reference Example 1 throughout 100 cycles or more. The above results indicate that, similarly to the batteries of Examples 1 to 7, the batteries of Examples 8 to 10 had more excellent charging-discharging cycle characteristics than the battery of Reference Example 1.

### (Example 11)

An aqueous solution as an alkaline electrolyte solution was prepared by dissolving 3 mass% of zinc oxide, 0.5 mass% of lithium hydroxide (LiOH), and 1 mass% of polyethylene glycol (PEG) in an aqueous solution in which 35 mass% of potassium hydroxide was dissolved.

An alkaline secondary battery was produced in the same manner as in Example 6 except for the use of the above alkaline electrolyte solution.

### (Example 12)

An alkaline secondary battery was produced in the same manner as in Example 11 except for the change in the concentration of the lithium hydroxide dissolved in the alkaline electrolyte solution to 1 mass%.

### (Example 13)

An alkaline secondary battery was produced in the same manner as in Example 11 except for the change in the concentration of the lithium hydroxide dissolved in the alkaline electrolyte solution to 2 mass%.

### (Example 14)

An alkaline secondary battery was produced in the same manner as in Example 11 except for the use of an aqueous solution as an alkaline electrolyte solution, which was prepared by dissolving 3 mass% of zinc oxide and 2 mass% of lithium hydroxide in an aqueous solution in which 35 mass% of potassium hydroxide was dissolved.

### (Example 15)

An alkaline secondary battery was produced in the same manner as in Example 11 except for the use of an aqueous solution as an alkaline electrolyte solution, which was prepared by dissolving 3 mass% of zinc oxide and 1 mass% of polyethylene glycol in an aqueous solution in which 35 mass% of potassium hydroxide was dissolved.

### (Example 16)

An alkaline secondary battery was produced in the same manner as in Example 11 except for the use of an aqueous solution as an alkaline electrolyte solution, which was prepared by dissolving 3 mass% of zinc oxide in an aqueous solution in which 35 mass% of potassium hydroxide was dissolved.

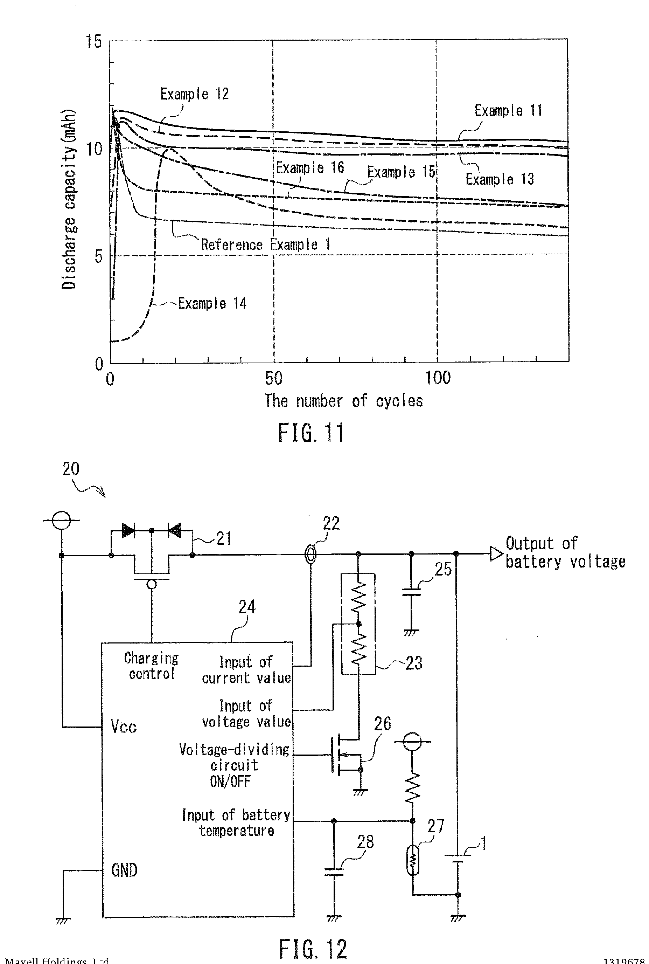

The alkaline secondary batteries of Examples 11 to 16 and Reference Example 1 were evaluated for the charging-discharging cycle characteristics in the following manner. The alkaline secondary batteries of Examples 11 to 16 and Reference Example 1 were measured for the discharge capacity per cycle by repeating a charging-discharging cycle 140 times. One cycle included a constant-current and constant-voltage charging (CC: 2 mA, CV: 1.8 V, final current: 0.2 mA) and a constant-current discharging (current value: 2 mA, final voltage: 1.0 V). FIG. 11 is a graph illustrating the measurement results, the horizontal axis representing the number of cycles, and the vertical axis representing the discharge capacity (mAh).

Table 7 shows the compositions of the positive electrode mixtures in the alkaline secondary batteries of Examples 11 to 16 and Reference Example 1, and the compositions of the additives of the alkaline electrolyte solutions. In Table 7, "CB particles" refer to "carbon black particles".

**[Table 7]**

| | Composition of positive electrode mixture (mass%) | | | | Additive of alkaline electrolyte solution (mass%) | |
|---|---|---|---|---|---|---|
| | Silver oxide | Graphite particles | CB particles | TiO₂ particles | LiOH | PEG |
| Reference Example 1 | 95.6 | 3.8 | 0.6 | 0 | 0 | 0 |
| Example 11 | 85.6 | 3.8 | 0.6 | 10 | 0.5 | 1 |
| Example 12 | 85.6 | 3.8 | 0.6 | 10 | 1 | 1 |
| Example 13 | 85.6 | 3.8 | 0.6 | 10 | 2 | 1 |
| Example 14 | 85.6 | 3.8 | 0.6 | 10 | 2 | 0 |
| Example 15 | 85.6 | 3.8 | 0.6 | 10 | 0 | 1 |
| Example 16 | 85.6 | 3.8 | 0.6 | 10 | 0 | 0 |

FIG. 11 indicates that the alkaline secondary batteries of Examples 11 to 13, whose alkaline electrolyte solution contained lithium hydroxide and polyalkylene glycol (PEG), favorably reduced the capacity drop even when the number of cycles proceeded, and had excellent charging-discharging cycle characteristics as compared with the batteries of Reference Example 1 and Example 16, whose alkaline electrolyte solution contained neither of them, the battery of Example 14, whose alkaline electrolyte solution did not contain PEG, and the battery of Example 15, whose alkaline electrolyte solution did not contain lithium hydroxide.

The battery of Example 14, whose alkaline electrolyte solution contained lithium hydroxide but did not contain PEG, had poor charging efficiency in the initial stage of the charging-discharging cycle and hence had low discharge capacity. On the other hand, the batteries of Examples 11 to 13, whose alkaline electrolyte solution contained PEG together with lithium hydroxide, improved the charging efficiency in the initial stage of the charging-discharging cycle and hence prevented the above problem ascribed to the lithium hydroxide.

Next, the charging method and the charging device of the alkaline secondary battery of the present invention will be described by way of examples.

FIG. 12 is a schematic circuit diagram illustrating a charging device 20 for charging the alkaline secondary battery 1 illustrated in FIG. 3. The charging device 20 mainly includes: a means for current supply mainly composed of a FET 21 that supplies a charging current to the battery 1; a means for measuring charging current mainly composed of a current transformer 22 that measures the charging current to be supplied to the battery 1; a means for measuring charging voltage mainly composed of a voltage-dividing circuit 23 that measures a charging voltage to be supplied to the battery 1; and a controller 24 that controls the charging current supplied by the FET 21 so that the battery 1 is charged according to a constant-current and constant-voltage mode.

A smoothing capacitor 25 is connected to an output side of the FET 21 to smoothen the charging voltage to be supplied to the battery 1. A switching element 26 is connected in series to the voltage-dividing circuit 23 so that the voltage-dividing circuit 23 is switchable between conduction and insulation states with respect to the ground, depending on an ON/OFF command signal from the controller 24. By insulating the voltage-dividing circuit 23 from the ground, it is possible to prevent the battery power from consuming via the voltage-dividing circuit 23 while the battery is not charged.

Further, a thermistor 27 is provided to measure the temperature of the battery 1. The voltage detected by the thermistor 27 is input to the controller 24 via a smoothing capacitor 28. The measured battery temperature can be used for judgement of a cutoff condition of charging, for example.

The charging control by the controller 24 according to the constant-current and constant-voltage charging mode can be basically performed by a conventionally known method. Specifically, the controller 24 controls a charging current to be supplied to the battery 1 by adjusting a drive voltage of the FET 21 so that, when starting the charging control, a constant-current charging during which the charging current to be supplied to the battery 1 from the FET 21 is constant is performed with a control target value of, e.g., 5 mA, and when the charging voltage (battery voltage) reaches a predetermined threshold of, e.g., 1.80 V, a constant-voltage charging during which the charging voltage is constant is performed with a control target value of, e.g., 1.80 V

The tolerance of the actual current value with respect to the control target current value during the constant-current charging and the tolerance of the actual voltage value with respect to the control target voltage value during the constant-voltage charging can be preferably 3% or less, and more preferably 2% or less. For example, when the control target value during the constant-voltage charging is 1.80 V and the tolerance is 2%, the actual voltage value regularly varies within a range from 1.764 V to 1.836 V By controlling the maximum value in the range of variation to be less than 1.856 V, at which the oxidation reaction to AgO occurs, it is possible to prevent the generation of unstable AgO in the positive electrode.

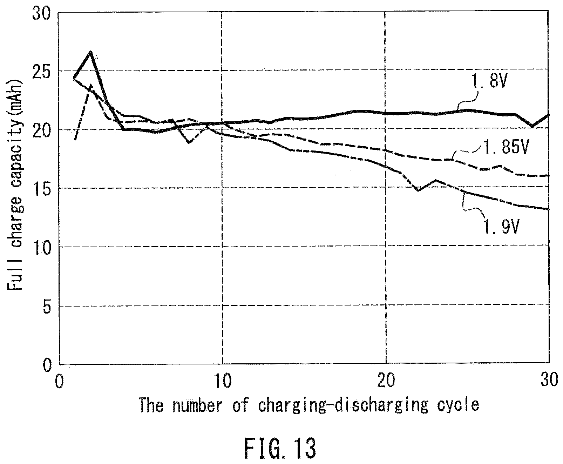

FIG. 13 illustrates experimental results on the change in the full charge capacity of the battery 1 when the threshold voltage, at which the constant-current charging shifts to the constant-voltage charging, and the voltage during the constant-voltage charging after shift were set to 1.90 V, 1.85 V, and 1.80 V, and the charging-discharging cycle of the alkaline secondary battery 1 was repeated.

Charging was performed using the charging device 20 of this example until the cutoff condition of charging was satisfied. Discharging was performed until the battery 1 was fully discharged by constant-current discharging.

FIG. 13 clearly indicates that, when the charging voltage during the constant-voltage charging was 1.90 V, the full charge capacity drop was relatively large as the number of the charging-discharging cycle increased, and the full charge capacity decreased by 40% or more by repetition of the charging-discharging cycle 30 times.

When the charging voltage during the constant-voltage charging was 1.85 V, the capacity drop was smaller as compared with the case of the charging voltage of 1.90 V, but the full charge capacity decreased by about 35% by repetition of the charging-discharging cycle 30 times.

On the other hand, when the charging voltage during the constant-voltage charging was 1.80 V, the full charge capacity drop was not observed even after the charging-discharging cycle was repeated, and stable charging-discharging cycle characteristics were obtained.

Incidentally, in the discharging characteristic evaluation of Examples 25 to 29 disclosed in the above Patent Document 5, a significant battery capacity drop did not appear even after repetition of 100 cycles with a constant-voltage charging of 1.85 V This is due to a difference in the discharging condition. Specifically, in Examples 25 to 29 of Patent Document 5 disclosed by the present applicant, discharging was terminated when the quantity of electricity reached 40% of the theoretical capacity. On the other hand, in this example, the battery was discharged 100%. In such a severe condition, the battery capacity drop appeared at a relatively early number of charging-discharging cycle in the case of 1.85 V charging, but favorable charging-discharging cycle characteristics were obtained in the case of 1.80 V charging even in such a severe discharging condition.

### Description of Reference Numerals

- 1: Alkaline secondary battery
- 2: Outer can
- 3: Sealing plate
- 4: Positive electrode (positive electrode mixture molded body)
- 5: Negative electrode
- 6: Separator
- 7: Anion conductive membrane
- 8: Gasket
- 20: Charging device
- 21: Means for current supply (FET)
- 22: Means for measuring charging current (current transformer)
- 23: Means for measuring charging voltage (voltage-dividing circuit)
- 24: Controller
- 25: Smoothing capacitor
- 26: Switching element
- 27: Thermistor
- 28: Smoothing capacitor

## Claims

1. An alkaline secondary battery (1), comprising:
a positive electrode (4) that is provided with a positive electrode mixture layer containing a silver oxide;
a negative electrode (5); and
an alkaline electrolyte,
wherein the positive electrode mixture layer further contains insulating inorganic particles and carbon particles,
the carbon particles comprise graphite particles and carbon black particles,
the positive electrode mixture layer contains the insulating inorganic particles in an amount of 0.1 to 7% by mass,
the positive electrode mixture layer contains the graphite particles in an amount of 1% by mass or more, and
the positive electrode mixture layer contains the carbon black particles in an amount of 0.1% by mass or more.

2. The alkaline secondary battery (1) according to claim 1, wherein the positive electrode mixture layer contains the silver oxide in an amount of 60% by mass or more.

3. The alkaline secondary battery (1) according to claim 1, wherein the positive electrode mixture layer contains the graphite particles in an amount of 7% by mass or less.

4. The alkaline secondary battery (1) according to claim 1, wherein the positive electrode mixture layer contains the carbon black particles in an amount of 1.5% by mass or less.

5. The alkaline secondary battery (1) according to claim 1, wherein the insulating inorganic particles have an average particle size of 0.5 µm or less.

6. The alkaline secondary battery (1) according to claim 1, wherein the positive electrode mixture layer contains, as the insulating inorganic particles, oxide particles of at least one element selected from the group consisting of Si, Zr, Ti, Al, Mg and Ca.

7. The alkaline secondary battery (1) according to claim 1,
wherein the negative electrode contains zinc-based particles selected from zinc particles and zinc alloy particles, and
the alkaline electrolyte contains potassium hydroxide or sodium hydroxide, and lithium hydroxide, and polyalkylene glycol.

8. The alkaline secondary battery (1) according to claim 7, wherein the alkaline electrolyte contains the lithium hydroxide in an amount of 0.1 to 5% by mass, and/or wherein the alkaline electrolyte contains the polyalkylene glycol in an amount of 0.1 to 8% by mass.

9. A method for charging the alkaline secondary battery (1) according to any one of claims 1 to 8,
the method comprising:
a constant-current charging step performed until a predetermined cutoff condition of constant-current charging is satisfied; and
a constant-voltage charging step performed after the cutoff condition of constant-current charging is satisfied,
wherein a charging voltage in the constant-voltage charging step is set so that in the positive electrode, an oxidation reaction from silver to silver oxide (I) progresses while an oxidation reaction from silver oxide (I) to silver oxide (II) does not progress in the constant-current charging step and the constant-voltage charging step.

10. The method for charging an alkaline secondary battery (1) according to claim 9, wherein a maximum value in a range of regular variation of the charging voltage in the constant-voltage charging step is less than 1.856 V.

11. The method for charging an alkaline secondary battery (1) according to claim 9, wherein the cutoff condition of constant-current charging is satisfied when a rate of increase in charging voltage per unit time exceeds a predetermined rate.

## Patentansprüche

1. Alkali-Sekundärbatterie (1), mit:
einer positiven Elektrode (4), die mit einer Positive-Elektrode-Mischungsschicht versehen ist, die ein Silberoxid enthält;
einer negativen Elektrode (5); und
einem alkalischen Elektrolyten,
wobei die Positive-Elektrode-Mischungsschicht ferner isolierende anorganische Partikel und Kohlenstoff-Partikel enthält,
die Kohlenstoff-Partikel Graphit-Partikel und Industrieruß-Partikel beinhalten,
die Positive-Elektrode-Mischungsschicht die isolierenden anorganischen Partikel in einem Anteil von 0,1 bis 7 Massen% enthält,
die Positive-Elektrode-Mischungsschicht die Graphit-Partikel in einem Anteil von 1 Massen% oder mehr enthält, und
die Positive-Elektrode-Mischungsschicht die Industrieruß-Partikel in einem Anteil von 0,1 Massen% oder mehr enthält.

2. Alkali-Sekundärbatterie (1) gemäß Anspruch 1, wobei die Positive-Elektrode-Mischungsschicht das Silberoxid in einem Anteil von 60 Massen% oder mehr enthält.

3. Alkali-Sekundärbatterie (1) gemäß Anspruch 1, wobei die Positive-Elektrode-Mischungsschicht die Graphit-Partikel in einem Anteil von 7 Massen% oder weniger enthält.

4. Alkali-Sekundärbatterie (1) gemäß Anspruch 1, wobei die Positive-Elektrode-Mischungsschicht die Industrieruß-Partikel in einem Anteil von 1,5 Massen% oder weniger enthält.

5. Alkali-Sekundärbatterie (1) gemäß Anspruch 1, wobei die isolierenden anorganischen Partikel eine durchschnittliche Partikelgröße von 0,5 µm oder weniger aufweisen.

6. Alkali-Sekundärbatterie (1) gemäß Anspruch 1, wobei die Positive-Elektrode-Mischungsschicht, als die isolierenden anorganischen Partikel, Oxidpartikel von wenigstens einem aus der Gruppe ausgewählten Element beinhaltet, die aus Si, Zr, Ti, Al, Mg und Ca besteht.

7. Alkali-Sekundärbatterie (1) gemäß Anspruch 1,
wobei die negative Elektrode Zink-basierte Partikel beinhaltet, die ausgewählt sind aus Zink-Partikeln und Zink-Legierungs-Partikeln, und
der alkalische Elektrolyt Kaliumhydroxid oder Natriumhydroxid sowie Lithiumhydroxid und Polyalkylenglycol enthält.

8. Alkali-Sekundärbatterie (1) gemäß Anspruch 7, wobei der alkalische Elektrolyt das Lithiumhydroxid in einem Gehalt von 0,1 bis 5 Massen% enthält, und/oder wobei der alkalische Elektrolyt das Polyalkylenglycol in einem Gehalt von 0,1 bis 8 Massen% enthält.

9. Verfahren zum Laden der Alkali-Sekundärbatterie (1) gemäß einem der Ansprüche 1 bis 8,
das Verfahren beinhaltend:
einen Konstant-Strom-Lade-Schritt, der ausgeführt wird, bis eine vorbestimmte Cutoff-Bedingung des Konstant-Strom-Ladens erfüllt ist; und
einen Konstant-Spannungs-Lade-Schritt, der ausgeführt wird, nachdem die Cutoff-Bedingung des Konstant-Strom-Ladens erfüllt wurde,
wobei eine Ladespannung beim Konstant-Spannungs-Lade-Schritt derart eingestellt ist, dass in der positiven Elektrode eine Oxidationsreaktion von Silber zu Silber(I)oxid fortschreitet, während eine Oxidationsreaktion von Silver(I)oxid zu Silber(II)oxid im Konstant-Strom-Lade-Schritt und im Konstant-Spannungs-Lade-Schritt nicht fortschreitet.

10. Verfahren zum Laden der Alkali-Sekundärbatterie (1) gemäß Anspruch 9, wobei ein Maximalwert in einem Bereich regulärer Variation der Ladespannung in dem Konstant-Spannungs-Lade-Schritt weniger beträgt als 1,856 V.

11. Verfahren zum Laden der Alkali-Sekundärbatterie (1) gemäß Anspruch 9, wobei die Cutoff-Bedingung des Konstant-Strom-Lade-Schritt erfüllt ist, wenn eine Rate der Erhöhung der Ladespannung pro Zeiteinheit eine vorbestimmte Rate übersteigt.

## Revendications

1. Batterie secondaire alcaline (1), comprenant :
une électrode positive (4) qui est pourvue d'une couche de mélange d'électrode positive contenant un oxyde d'argent ;
une électrode négative (5) ; et
un électrolyte alcalin,
dans laquelle la couche de mélange d'électrode positive contient en outre des particules inorganiques isolantes et des particules de carbone,
les particules de carbone comprennent des particules de graphite et des particules de noir de carbone, la couche de mélange d'électrode positive contient les particules inorganiques isolantes en une quantité de 0,1 à 7 % en masse,
la couche de mélange d'électrode positive contient les particules de graphite en une quantité de 1 % en masse ou plus, et
la couche de mélange d'électrode positive contient les particules de noir de carbone en une quantité de 0,1 % en masse ou plus.

2. Batterie secondaire alcaline (1) selon la revendication 1, dans laquelle la couche de mélange d'électrode positive contient l'oxyde d'argent en une quantité de 60 % en masse ou plus.

3. Batterie secondaire alcaline (1) selon la revendication 1, dans laquelle la couche de mélange d'électrode positive contient les particules de graphite en une quantité de 7 % en masse ou moins.

4. Batterie secondaire alcaline (1) selon la revendication 1, dans laquelle la couche de mélange d'électrode positive contient les particules de noir de carbone en une quantité de 1,5 % en masse ou moins.

5. Batterie secondaire alcaline (1) selon la revendication 1, dans laquelle les particules inorganiques isolantes ont une taille moyenne de particules de 0,5 pm ou moins.

6. Batterie secondaire alcaline (1) selon la revendication 1, dans laquelle la couche de mélange d'électrode positive contient, en tant que particules inorganiques isolantes, des particules d'oxyde d'au moins un élément choisi dans le groupe constitué de Si, Zr, Ti, Al, Mg et Ca.

7. Batterie secondaire alcaline (1) selon la revendication 1, dans laquelle
l'électrode négative contient des particules à base de zinc choisies parmi des particules de zinc et des particules d'alliage de zinc, et
l'électrolyte alcalin contient de l'hydroxyde de potassium ou de l'hydroxyde de sodium, et de l'hydroxyde de lithium, et du polyalkylène glycol.

8. Batterie secondaire alcaline (1) selon la revendication 7, dans laquelle l'électrolyte alcalin contient l'hydroxyde de lithium en une quantité de 0,1 à 5 % en masse, et/ou dans laquelle l'électrolyte alcalin contient le polyalkylène glycol en une quantité de 0,1 à 8 % en masse.

9. Procédé de chargement de la batterie secondaire alcaline (1) selon l'une quelconque des revendications 1 à 8, le procédé comprenant :
une étape de charge à courant constant effectuée jusqu'à ce qu'une condition de coupure prédéterminée de charge à courant constant soit satisfaite ; et
une étape de charge à tension constante effectuée après que la condition de coupure de charge à courant constant est satisfaite,
dans lequel une tension de charge dans l'étape de charge à tension constante est réglée de sorte que dans l'électrode positive, une réaction d'oxydation de l'argent à l'oxyde d'argent (1) progresse tandis qu'une réaction d'oxydation provenant de l'oxyde d'argent (I) à l'oxyde d'argent (II) n'évolue pas dans l'étape de charge à courant constant et l'étape de charge à tension constante.

10. Procédé de charge d'une batterie secondaire alcaline (1) selon la revendication 9, dans lequel une valeur maximale dans une plage de variation régulière de la tension de charge dans l'étape de charge à tension constante est inférieure à 1,856 V.

11. Procédé de charge d'une batterie secondaire alcaline (1) selon la revendication 9, dans lequel la condition de coupure de charge à courant constant est satisfaite lorsqu'une vitesse d'augmentation de la tension de charge par unité de temps dépasse une vitesse prédéterminée.
